# EUROPEAN PATENT APPLICATION

(11) **EP 2 552 112 A1**
(43) Date of publication of application: **30.01.2013**
(21) Application number: 10852400.0
(22) Date of filing: 03.09.2010
(51) Int. Cl.: H04N 7/173

(54) **METHOD, SYSTEM AND SET TOP BOX FOR IMPLEMENTING INTERACTIVE NETWORK TELEVISION SERVICE CONTROL**

(30) Priority: 02.06.2010 CN 201010190964
(71) Applicant: ZTE Corporation, Shenzhen, Guangdong 518057 (CN)
(72) Inventor: HE, Baolin, Shenzhen Guangdong 518057 (CN); CHEN, Shengqing, Shenzhen Guangdong 518057 (CN)
(74) Representative: Novagraaf Technologies
(86) International application number: PCT/CN2010/076607
(87) International publication number: WO 2011/150605

(57) **Abstract**

A method, system and set-top box for implementing internet protocol television (IPTV) service control are provided in the present invention, and said method includes: when the set top box determines that it needs to control and adjust the IPTV service, the set-top box using a communication protocol supported by a home gateway to transmit control information to the home gateway (2), the home gateway performing corresponding control on said IPTV service according to the control information (3). In the present invention, when the IPTV service is developed in a home network and when the set-top box determines that the IPTV service needs to be adjusted and it needs the corresponding cooperation of the home gateway device, the set-top box uses the communication protocol supported by the home gateway to communicate with the home gateway and control the IPTV service. Compared with the related art, the set-top box in the present invention can control the IPTV service in time more conveniently and quickly through the real-time communication with the home gateway, thus improving the user experience.

## Description

### Technical Field

The present invention relates to Internet Protocol Television (referred to as IPTV) technology in the home network, and more especially, to a method, system and set-top box for implementing Internet Protocol Television service control.

### Background of the Related Art

With the continuous development of the Internet and its application technologies, people can use the Internet to carry out increasingly enriched applications and services, and one of the most common services that are interested by users is the video service. As the portal of a home user accessing the Internet, the home gateway has integrated more and more enriched video application services, comprising the IPTV service, online viewing, video surveillance and other services; wherein, the IPTV service is the most common one and provides the greatest profits to the operators, and as two important devices bearing the IPTV service in a home network: the set-top box and the home gateway, they are particularly important for the service cooperation.

In the actual development of the existing IPTV service, since there are differences in the capability of set-top box processing the video stream, the quality condition of the network itself can also cause the instability of video stream, which brings some challenges and difficulties for the set-top box receiving and processing the video stream. It results that the set-top box should adjust the reception of video stream dynamically and in real time according to the situation, and such adjustment sometimes needs the cooperation of the home gateway device, such as adjusting the priority of the video stream, limiting the speed or performing other operations.

In the current applications, the gateway device and the set-top box in the home network cannot dynamically exchange the information or cannot complete the dynamic control which is performed by the set-top box on the home gateway. In practical applications, usually according to the networking conditions, after one-time configuration is completed in the home gateway, there are no subsequent adjustments, or if a major adjustment is needed, the method of manually adjusting the configuration of home gateway is used, which cannot meet the real-time change of the IPTV service and affects the user experience.

### Summary of the Invention

The technical problem to be solved in the present invention is to provide a method, system and set-top box for implementing Internet Protocol Television service control to implement the real-time communication between the set-top box and the home gateway and control the IPTV service, thus improving the user experience.

In order to solve the aforementioned technical problem, the present invention provides a method for implementing Internet Protocol Television (IPTV) service control, comprising: when a set-top box determines that it needs to control and adjust the IPTV service, using a communication protocol supported by a home gateway to send control information to said home gateway, and said home gateway performing the corresponding control on said IPTV service according to the control information.

The aforementioned method also has the following feature:
said control information comprises one of the following control instructions: a control instruction of converting the play mode of the IPTV service from multicast to unicast, a control instruction of converting the play mode of the IPTV service from unicast to multicast, and a control instruction of adjusting the priority of the IPTV service.

The aforementioned method also has the following feature:
the communication protocol supported by said home gateway comprises the Universal Plug and Play protocol.

The aforementioned method also has the following feature:
said step of using the communication protocol supported by the home gateway to send the control information to said home gateway comprises: setting a Universal Plug and Play control point module supporting the Universal Plug and Play protocol in the set-top box, said Universal Plug and Play control point module using the Universal Plug and Play protocol to encapsulate and send the control message to said home gateway.

In order to solve the aforementioned technical problem, the present invention also provides a system for implementing Internet Protocol Television service control, comprising a set-top box and a home gateway; said set-top box is configured to: when determining that it needs to control and adjust the IPTV service, send control information to said home gateway through a communication protocol supported by the home gateway; said home gateway is configured to: receive said control information sent by said set-top box and perform corresponding control on said IPTV service according to said control information.

The aforementioned system also has the following feature:
said set-top box comprises a service adjustment and judgment module and a universal plug and play control point module; said home gateway comprises a Universal Plug and Play internet gateway device module and a function control module; said service adjustment and judgment module is configured to: when determining that it needs to adjust the IPTV service, send the control information to said communication module; said Universal Plug and Play control point module is configured to: use the Universal Plug and Play protocol to encapsulate said control message and send the control message to said Universal Plug and Play internet gateway device module; said Universal Plug and Play internet gateway device module is configured to: receive said control message and use the Universal Plug and Play protocol to de-capsulate, analyze out the control instruction and send the control instruction message to the corresponding function control module; said function control module is configured to: perform the corresponding control operation on said IPTV service according to said control instruction message.

The aforementioned system also has the following feature:
said control information contains one of the following control instructions: a control instruction of converting the play mode of the IPTV service from multicast to unicast, a control instruction of converting the play mode of the IPTV service from unicast to multicast, and a control instruction of adjusting the priority of the IPTV service.

In order to solve the aforementioned technical problem, the present invention provides a set-top box for implementing Internet Protocol Television service control, comprising a service adjustment and judgment module and a communication module; said service adjustment and judgment module is configured to: when determining that it needs to control and adjust the IPTV service, instruct said communication module to send the control information; said communication module is configured to: according to the instruction from said service adjustment and judgment module, send the control information to said home gateway through the communication protocol supported by the home gateway.

The aforementioned set-top box also has the following feature:
said communication module is the Universal Plug and Play control point module; said Universal Plug and Play control point module is configured to: use the Universal Plug and Play protocol to encapsulate the control message and send the control message to said home gateway.

The aforementioned set-top box also has the following feature:
said control information comprises one of the following control instructions: a control instruction of converting the play mode of the IPTV service from multicast to unicast, a control instruction of converting the play mode of the IPTV service from unicast to multicast, and a control instruction of adjusting the priority of the IPTV service.

In the present invention, when developing the IPTV service in a home network, when the set-top box determines that the IPTV service needs to be adjusted and it needs the home gateway device to perform the corresponding cooperation, the communication protocol supported by the home gateway is utilized to communicate with the home gateway and control the IPTV service. Compared with the related art, the set-top box in the present invention can communicate with said home gateway in real time more conveniently and efficiently and control the IPTV service in a timely manner, thus improving the user experience.

### Brief Description of Drawings

FIG. 1 is a structure diagram of a system for implementing Internet Protocol Television service control in accordance with an embodiment;
FIG. 2 is a flow chart of a method for implementing Internet Protocol Television service control in accordance with an embodiment;
FIG. 3 is a flow chart of controlling the Internet Protocol Television service to convert from multicast to unicast in accordance with a first specific embodiment;
FIG. 4 is a flow chart of controlling the IPTV service to implement the adjustment of quality of service in accordance with a second specific embodiment.

### Preferred Embodiments of the Present Invention

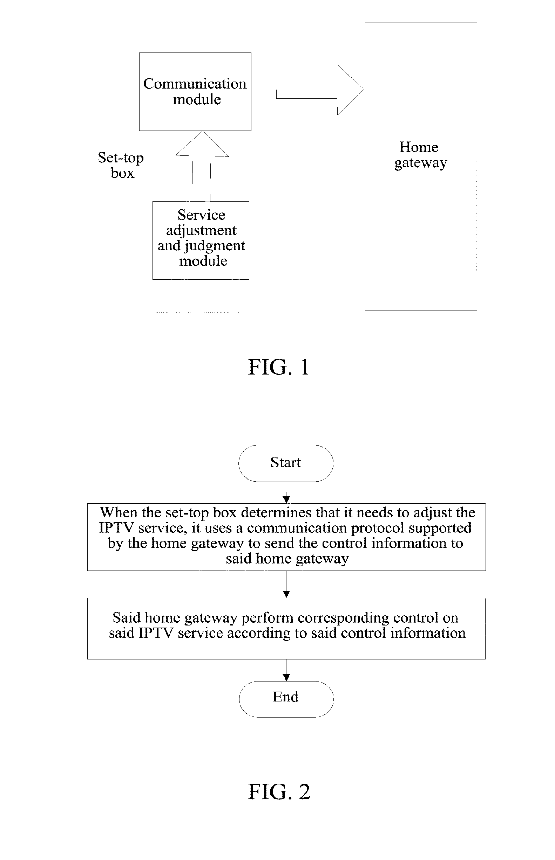

As shown in FIG. 1, the system for implementing the Internet Protocol Television service control comprises a set-top box and a home gateway.

Said set-top box is used to: when determining that it needs to control and adjust the IPTV service, send control information to said home gateway through a communication protocol supported by the home gateway; said home gateway is used to: receive said control information sent by said set-top box and perform corresponding control on the IPTV service according to the control information.

The set-top box comprises a service adjustment and judgment module and a communication module.

Said service adjustment and judgment module is used to: when determining that it needs to control and adjust the IPTV service, instruct said communication module to send the control information; said communication module is used to: according to the instruction from said service adjustment and judgment module, send the control information to said home gateway through the communication protocol supported by the home gateway.

In the specific implementation, the communication protocol supported by said home gateway can be the Universal Plug and Play (UPnP) protocol, or any other communication protocol. Based on the UPnP protocol, the specific implementation is described as follows, and the implementation principle of using other communication protocols is the same as the following UPnP protocol based method.

The communication module is the Universal Plug and Play control point (UPnP CP) module; said UPnP CP module is used to: support said UPnP protocol and use the UPnP protocol to encapsulate the control message and send the control message to the said home gateway.

Said home gateway comprises the Universal Plug and Play Internet gateway device (referred to as the UPnP IGD) module and the function control module.

The Universal Plug and Play Internet gateway device module is used to implement the sending and receiving of the UPnP protocol packet, and after receiving said control message and using the Universal Plug and Play protocol to de-capsulate the message, analyze out the control instruction and send the control instruction message to the corresponding function control module. In this system, and in the standard UPnP IGD object model, the objects and parameters that need to be possessed for extending service adjustment enable said home gateway to identify the control message sent by the set-top box.

The function control module is used to perform the corresponding control operation on the IPTV service according to the control instruction message.
the message interface is used between the service adjustment and judgment module and the UPnP CP module in the set-top box, specifically, which type of message interface can be set depends on the hardware structure of the set-top box. The message interface is also used between the UPnP IGD module and the function control module in the home gateway, specifically which type of message interface can be set depends on the hardware structure of the home gateway. The UPnP protocol packets are used between the UPnP CP module of the set-top box and the UPnP IGD module of the home gateway for interaction.

Said control information contains one of the following control instructions: a control instruction of converting the play mode of the IPTV service from multicast to unicast, a control instruction of converting the play mode of the IPTV service from unicast to multicast, and a control instruction of adjusting the priority of the IPTV service.

When the control operation instructed by the control message is to control the play mode conversion of the IPTV service from multicast to unicast or control the play mode conversion of the IPTV service from unicast to multicast, after the universal Plug and Play Internet gateway device module analyzes this control message, it triggers the multicast control function module in the home gateway to perform processing.

The control operation instructed by the control information is to adjust the priority of the IPTV service, after the Universal Plug and Play internet gateway device module analyzes the control message, it triggers the Quality of Service (referred to as QoS) control function module in the home gateway to perform processing.

As shown in FIG. 2, the method for implementing the Internet Protocol Television service control comprises: when a set-top box determines that it needs to control and adjust the IPTV service, using a communication protocol supported by the home gateway to send control information to said home gateway, and said home gateway performing the corresponding control on said IPTV service according to the control information.

Said control information comprises one of the following control instructions: a control instruction of converting the play mode of the IPTV service from multicast to unicast, a control instruction of converting the play mode of the IPTV service from unicast to multicast, and a control instruction of adjusting the priority of the IPTV service.

The communication protocol supported by the home gateway can be acquired through a variety of ways, and a function module supporting the communication protocol can be set in the set-top box for the set-top box to communicate with the home gateway.

In the specific implementation, the communication protocol supported by the home gateway can be the Universal Plug and Play (UPnP) protocol, or any other communication protocol. Based on the UPnP protocol, the specific implementation is described as follows, and the implementation principle of using other communication protocols is the same as the following UPnP protocol based method.

When the used communication protocol is the Universal Plug and Play protocol, the method for implementing the Internet Protocol Television service control specifically comprises the following steps:
in step S1, the service adjustment and judgment module in the set-top box detects and collects the IPTV service data in real time, and determines that it needs to control and adjust the IPTV service.
the main parameters for the service adjustment and judgment module judging whether it needs to adjust the IPTV service are parameters such as the service data traffic, delay and other parameters, and a person of ordinary skill in the art can set different triggering thresholds and/or triggering conditions for requirements of the user or system according to the aforementioned parameters.

In step S2, the service adjustment and judgment module in the set-top box sends the control information to the UPnP CP module.

In step S3, the UPnP CP module uses the Universal Plug and Play protocol to encapsulate said control message and send it to the home gateway.

In step S4, after the UPnP IGD module in the home gateway receives the control message and after it uses the Universal Plug and Play protocol to de-capsulate the message, it analyzes out the control instruction and sends the control instruction message to the corresponding function control module.

When the command corresponding to the service adjustment objects and parameters extended by the UPnP IGD are used in the control message, the UPnP IGD module analyzes out the control command, sorts the control command, finds the corresponding function module and sends the control message to that function module.

In step S5, the corresponding function control module in the home gateway performs the corresponding control operation on the IPTV service according to the control instruction message.

In the following, the present invention will be described in detail with combination of the specific embodiments.

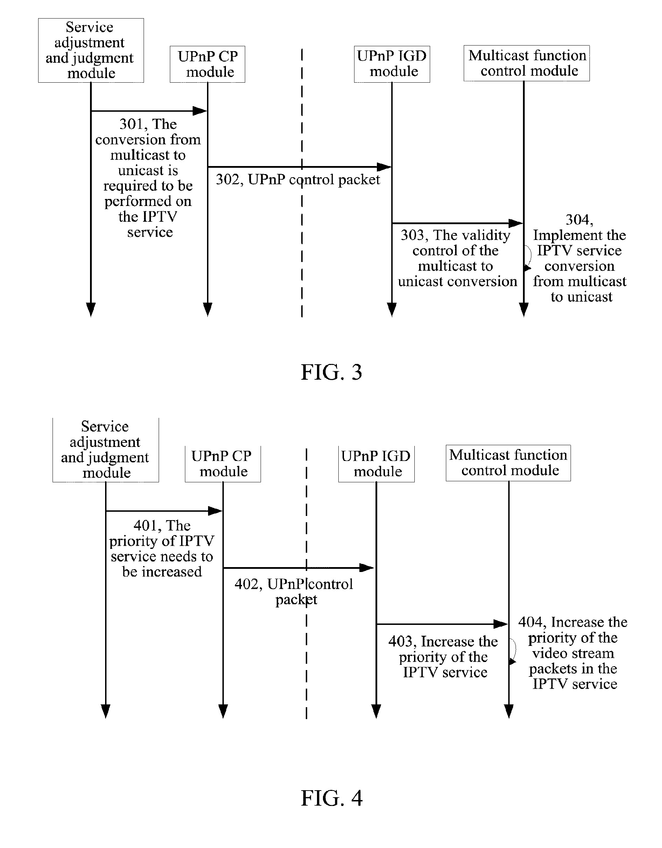

The first embodiment:
As shown in FIG. 3, the process of controlling the play mode of the IPTV service to convert from multicast to unicast is as follows:
   in step 301, the service adjustment and judgment module in the set-top box determines that it needs to control the play mode of the IPTV service to convert from multicast to unicast, the control message is sent to the UPnP CP module;
   in step 302, the UPnP CP module in the set-top box constructs a UPnP control packet and sends it to the home gateway;
   in step 303, the UPnP IGD module in the home gateway analyzes out the control packet, extracts the control command and sends it to the multicast control function module in the home gateway;
   in step 304, the multicast function module in the home gateway controls the play mode of the IPTV service to convert from multicast to unicast.

The second embodiment:
as shown in FIG. 4, the process of controlling the IPTV service to control the priority is as follows:
   in step 401, when the service adjustment and judgment module in the set-top box determines that it needs to increase and adjust the priority of the video stream in the IPTV service (for example, the priority needs to be adjusted to the highest priority), it sends the control message which indicates increasing the priority of the video stream to the UPnP CP module;
   in step 402, the UPnP CP module in the set-top box constructs the UPnP control packet and sends it to the home gateway;
   in step 403, the UPnP IGD module in the home gateway analyzes the control packet, extracts the control command and sends it to the QOS control function module in the home gateway;
   in step 404, the QOS control function module in the home gateway increases the priority of the video stream packets in the IPTV service.

Although for the purpose of illustration, the preferred embodiments of the present invention have been disclosed, a person of ordinary skill in the art can be aware that the improvements, increments and replacements are also possible, therefore the scope of the invention should not be limited to these embodiments.

The person of ordinary skill in the art can understand that all or part of the steps in the aforementioned method can be completed by the program instructing the related hardware, the program can be stored in a computer readable storage medium, such as read-only memory, disk, or CD-ROM and so on. Optionally, all or part of the steps in the aforementioned embodiments can be implemented with one or more integrated circuits. Accordingly, each module/unit in the aforementioned embodiments can be implemented in the form of hardware or software function module. The present invention is not limited to any particular form of hardware and software combination.

### Industrial Applicability

Compared with the related art, the set-top box in the present invention can communicate with said home gateway in real time more conveniently and efficiently and control the IPTV service in a timely manner, thus improving the user experience.

## Claims

1. A method for implementing Internet Protocol Television (IPTV) service control, comprising:
when determining that there is a need to control and adjust an IPTV service, a set-top box using a communication protocol supported by a home gateway to send control information to said home gateway; and
said home gateway performing corresponding control on said IPTV service according to the control information.

2. The method of claim 1, wherein,
said control information comprises one of following control instructions: a control instruction of converting a play mode of the IPTV service from multicast to unicast, a control instruction of converting the play mode of the IPTV service from unicast to multicast and a control instruction of adjusting a priority of the IPTV service.

3. The method of claim 1, wherein,
the communication protocol supported by said home gateway comprises a Universal Plug and Play protocol.

4. The method of claim 3, wherein,
said step of the set-top box using the communication protocol supported by the home gateway to send the control information to said home gateway comprises: setting a Universal Plug and Play control point module supporting the Universal Plug and Play protocol in the set-top box, said Universal Plug and Play control point module using the Universal Plug and Play protocol to encapsulate and send a control message to said home gateway.

5. A system for implementing Internet Protocol Television service control, comprising a set-top box and a home gateway; wherein
said set-top box is configured to: when determining that there is a need to control and adjust an IPTV service, send control information to said home gateway through a communication protocol supported by the home gateway;
said home gateway is configured to: receive said control information sent by said set-top box and perform corresponding control on said IPTV service according to said control information.

6. The system of claim 5, wherein,
said set-top box comprises a service adjustment and judgment module and a Universal Plug and Play control point module; said home gateway comprises a Universal Plug and Play internet gateway device module and a function control module;
said service adjustment and judgment module is configured to: when determining that there is a need to adjust the IPTV service, send the control information to said communication module;
said Universal Plug and Play control point module is configured to: use a Universal Plug and Play protocol to encapsulate a control message and send the control message to said Universal Plug and Play internet gateway device module;
said Universal Plug and Play internet gateway device module is configured to: receive said control message and use the Universal Plug and Play protocol to de-capsulate, analyze out a control instruction and send a control instruction message to a corresponding function control module;
said function control module is configured to: perform a corresponding control operation on said IPTV service according to said control instruction message.

7. The system of claim 5 or 6, wherein,
said control information contains one of following control instructions: a control instruction of converting a play mode of the IPTV service from multicast to unicast, a control instruction of converting the play mode of the IPTV service from unicast to multicast and a control instruction of adjusting a priority of the IPTV service.

8. A set-top box for implementing Internet Protocol Television service control, comprising a service adjustment and judgment module and a communication module; wherein
said service adjustment and judgment module is configured to: when determining that there is a need to control and adjust an IPTV service, instruct said communication module to send control information;
said communication module is configured to: according to an instruction from said service adjustment and judgment module, send the control information to a home gateway through a communication protocol supported by the home gateway.

9. The set-top box of claim 8, wherein,
said communication module is a Universal Plug and Play control point module;
said Universal Plug and Play control point module is configured to: use a Universal Plug and Play protocol to encapsulate a control message and send the control message to said home gateway.

10. The set-top box of claim 8 or 9, wherein,
said control information comprises one of following control instructions: a control instruction of converting a play mode of the IPTV service from multicast to unicast, a control instruction of converting the play mode of the IPTV service from unicast to multicast and a control instruction of adjusting a priority of the IPTV service.
